(19) Europäisches Patentamt
European Patent Office
Office européen des brevets

(11) **EP 3 916 343 A1**

(12) **EUROPEAN PATENT APPLICATION**

(43) Date of publication:
**01.12.2021  Bulletin 2021/48**

(51) Int Cl.:
***G01B 11/06*** (2006.01)     ***G01B 21/04*** (2006.01)

(21) Application number: **21176100.2**

(22) Date of filing: **26.05.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.05.2020   US 202016886044**

(71) Applicant: **AGR INTERNATIONAL, INC.
Butler,
Pennsylvania 16003-0149 (US)**

(72) Inventor: **Fisher, Edward
Butler, PA 16003 (US) (US)**

(74) Representative: **K&L Gates LLP
Karolinen Karree
Karlstraße 12
80333 München (DE)**

(54) **MEASURING THICKNESS OF TRANSLUCENT PLASTIC ARTICLES**

(57)     Systems and methods measure a thickness of a plastic article in two phases. In an initialization phase, a photosensor separately and sequentially measures incident light energy from a light source for each a plurality of spectral sub-regions within a total measurement range without the plastic article to be measured being present. A processor computes a baseline incident signal level for the initialization phase by summing the incident light energy for each of the plurality of spectral sub-regions within the total measurement range. In a measurement phase, the photosensor detects light energy that is incident on the photosensor after being transmitted by the light source through the plastic article. The processor computes the thickness of the plastic article based on at least (i) light energy detected by the photosensor and (ii) the computed baseline incident signal level.

FIGURE 1

## Description

## BACKGROUND

The thickness of many plastics such as PET can be measured by absorption of near-infrared (NIR) light in the range of 1350nm to 2450nm. Most plastics such as PET will have multiple absorption bands and multiple transparent bands in the NIR. Thickness measurement can be done by measuring the absorption at 1 or more wavelengths in the NIR range. Typically, two wavelengths are chosen from the NIR spectrum of the material: one wavelength that is primarily absorbed by the material and a second wavelength where the material is primarily transparent. The two-wavelength measurement technique uses the transparent wavelength to compensate for non-thickness signal losses from the material, such as losses due to surface reflections, geometric features, etc.

Some plastic materials such as high density polyethylene (HDPE) have a "feature-less" spectrum without distinct absorption wavelengths that is moderately to strongly absorbing across the entire NIR spectrum. Thickness of these materials is difficult to measure by standard absorption methods.

## SUMMARY

In one general aspect, the present invention is directed to systems and methods for measuring a thickness of a plastic article. The system may implement, and the method may have, two phases: an initialization phase and a measurement phase. In the initialization phase, a photosensor separately and sequentially measures incident light energy from a light source for each a plurality of spectral sub-regions within a total measurement range without the plastic article to be measured being present. The total measurement range can comprise a starting near-infrared (NIR) wavelength and an ending NIR wavelength. The photosensor is opposite, spaced apart from, and faces the light source, such that the plastic article is positionable between the light source and the photosensor during the subsequent measurement phase. A processor that is in communication with the photosensor computes a baseline incident signal level for the initialization phase by summing the incident light energy for each of the plurality of spectral sub-regions within the total measurement range. In the subsequent measurement phase, the plastic article is positioned between the light source and the photosensor, and the photosensor detects light energy that is incident on the photosensor after being transmitted by the light source through the plastic article. This measurement in the measurement phase can be made over the entirety of the total measurement range simultaneously. That is, individually measurements for the spectral sub-regions do not need to be made. The processor computes the thickness of the plastic article based on at least (i) light energy detected by the photosensor that is transmitted from the light source through the plastic article over the total measurement range during the measurement phase and (ii) the computed baseline incident signal level.

The present invention provides a way to accurately measure the thickness of a plastic article in a non-contact manner with NIR light energy and that works for translucent plastic materials and many different types of plastic, including HDPE, polypropylene (PP), polyethylene terephthalate (PET) (especially opaque or translucent PET materials), and polyethylene (PE), for example. These and other benefits that are realizable through embodiments of the present invention will be apparent from the description below.

## FIGURES

Various embodiments of the present invention are described herein by example in conjunction with the following figures.

Figure 1 is a diagram of a measurement system for measuring the thickness of a plastic article according to various embodiments of the present invention.

Figure 2 depicts how a total wavelength measurement range can be sub-divided into sub-ranges for determining a baseline incident signal level used in computing the thickness of the plastic article according to various embodiments of the present invention.

## DESCRIPTION

In one general aspect, the present invention is directed to systems and methods for measuring the thickness of plastic articles, especially translucent plastic articles. As used herein, "translucent" means allowing light, but not detailed shapes, to pass through. The measurement systems and methods described herein are primarily for, and best suited for, translucent plastic materials, but the inventive systems and methods could also be used for plastic materials that are non-translucent. Also, the inventive systems and methods may be used for measuring the thickness of any type of plastic article, such as (but not limited to) articles made from HDPE, polypropylene (PP), polyethylene terephthalate (PET) (especially opaque or translucent PET materials), and polyethylene (PE), for example. The inventive systems and methods could be used for measuring the thickness of a large number of different types of plastic articles, including but not limited to sidewalls of bottles, containers, etc.

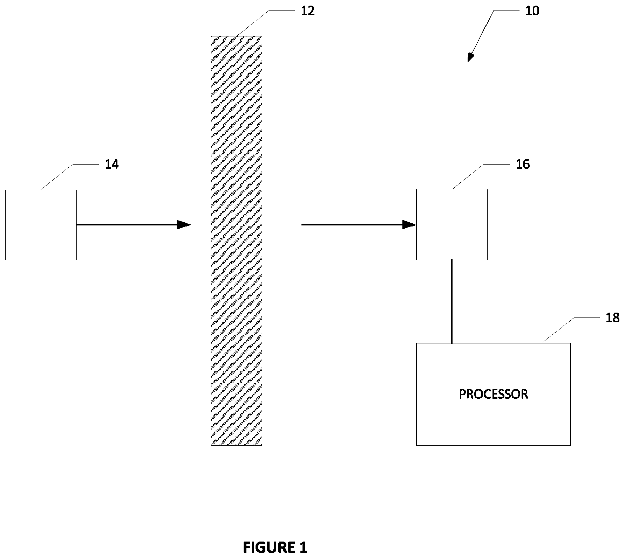

Figure 1 is a diagram of a measurement system 10 according to various embodiments of the present invention. The measurement system 10 is for measuring the thickness of a plastic article 12. The plastic article 12 could be made from HDPE, PP, PET or PE, for example. The system 10 includes a light source 14 and a detector or photosensor 16. The light source 14 emits NIR light energy toward the plastic article 12, some of which is absorbed by the plastic article 12. The photosensor 16 is on the opposite side of the plastic article 12 from the light source 14, such that photosensor 16 detects NIR light energy that passes through the article 12. The photosensor 16 is in communication with a processor 18 or computer device that computes the thickness the plastic article 12 based on the NIR light energy emitted by the light source 14 that is detected by the photosensor 16.

In some embodiments, the light source 14 is a single light source that emits light energy across the entirety of the desired NIR wavelengths used for the measurement, such as a halogen light source. The photosensor 16 preferably is a programmable spectrometer that, through movable mirrors, can detect light energy at select, specific wavelength bands in the NIR spectrum. The inventive technique by which the system 10 measures the thickness of the article 12 is described below. The system 10 could be an off-line or lab-type measurement system or it could be part of an in-line measurement system (e.g., a measurement system that measures the thickness of the articles at the rate at which the articles are being produced by a manufacturing machine).

Some plastic materials, such as HDPE plastic, are generally translucent, meaning some NIR light energy is transmitted through the plastic, but detailed shapes on the article cannot be seen. The NIR spectrum of HDPE is generally featureless showing weak or no absorption bands. The overall NIR transmission is typically 10% to less than 1% of the incident NIR across the entire NIR spectrum. The signal strength in any one wavelength band is too small for detection. The transmission signal can be increased to a measurable level by utilizing the entire NIR spectrum (e.g., 1350nm to 2350nm) as the absorption band. The thickness of the article can be cal-

$$t = \frac{ln\frac{I_0}{I_a}}{K},$$

culated using the equation where t is thickness, $I_0$ the intensity of the incident NIR light energy detected by the photosensor 16 when no article is present (e.g., "baseline incident signal level"), Ia is the intensity of transmitted NIR light energy through the article 12 that is detected by the photosensor 16 when the article 12 is present, and K is a calibration constant.

The incident signal of the entire NIR spectrum will be many times the saturation level of a typical spectrometer or other photodetector and the incident signal is not directly measurable. The incident signal can be reduced to a measurable level by dividing the NIR spectrum into a series of smaller spectral sub-regions that do not individually saturate the photodetector. The series of spectral sub-regions can cover, in various embodiments, a complete spectrum from a first (e.g., starting or shorter) wavelength to a second (e.g., ending or longer) wavelength, such as 1350nm to 2350nm, without overlap. The total baseline incident signal level, $I_0$, can be considered

to equal the sum or integration of the signals from the sub-regions. An example of spectral sub-regions with the range from 1350 nm to 2350 nm is: 1)1350nm to 1550nm, 2)1550nm to 1750nm, 3)1750nm to 1950nm, 4)1950nm to 2150nm and 5)2150nm to 2350nm. The baseline incident level in this example is: $I_0 = I_1 + I_2 + I_3 + I_4 + I_5$, where $I_N$ is the measured incident signal detected by the photosensor 16 for the Nth spectral sub-region. The number of spectral sub-regions can be adjusted as needed to prevent signal saturation in any sub-region. That is, the signal level for each of the sub-regions is preferably below the saturation level of the photosensor. This measurement of the baseline incident signal level (10) is made first, during an "initialization" phase of the process, without the article 12 between the light source 14 and the photosensor 16. Thereafter, this measurement of the baseline incident signal level ($I_0$) is used by the processor 18 in the "measurement" phase, to compute the thickness of the article 12 when the article 12 is present between the light source 14 and the photosensor 16 for measurement.

The light source 14 may be a broadband light source, such as a halogen lamp that provides illumination across the desired NIR spectrum, such as 1350nm to 2350nm. The output of a typical halogen lamp varies across the NIR spectrum; therefore, the widths (wavelength range) of the spectral sub-regions can be adjusted to avoid saturation at the detector 16. For example, one or more optical filters can be used to absorb radiation at wavelengths where an excessive output wavelength range of the source could cause the detector 16 to saturate. In some embodiments, the optical filter could block (absorb) radiation such that light from the broadband light source at the wavelength range of the filter where the filter blocks radiation would be used less or not be used at all in measuring the thickness of the article.

A programmable spectrometer may be used as the photosensor 16 to define, and measure the incident signal for, the spectral sub-regions. The spectrometer can be programmed with starting and ending wavelengths to define a total measurement spectral region. A plurality of separate spectral sub-regions within the total measurement spectral region can be defined by programming of the spectrometer and selected for measurement by the spectrometer. The baseline incident light level $I_0$ is found during the initialization phase by sequentially activating the sub-regions and adding the signals for each sub-region, e.g., $I_0 = \sum_1^N I_n$, where In is the incident signal for the nth spectral sub-region. Thus, through its movable mirrors, for example, the spectrometer 16 can sequentially step or scan through each of the sub-regions, with the incident signal for each sub-region then being summed by the processor to compute $I_0$.

After $I_0$ is determined in this manner during the initialization phase, the system 10 is ready for the measurement phase, where the thickness of the article 12 is measured. During the measurement phase, the article 12 is placed in the light path between the light source 14 and the photosensor 16 as shown in Figure 1. Since the article 12 presumably has a low NIR transmission characteristic, the signal can be measured by the photosensor 16 across the total measurement range (e.g. from 1350nm to 2350nm) simultaneously. That is, for example, the spectrometer 16 can be programmed (e.g., all the mirrors turned on) for the total measurement region (e.g., from 1350nm to 2350nm). If Ia represents the incident signal when the article 12 is present across the total measurement region (e.g., 1350nm to 2350nm), then the processor 18 can compute the thickness t of the article

$$12 \text{ as} = \frac{ln \frac{I_0}{I_a}}{K},$$

as described above. The initialization phase does not need to be repeated each time an article 12 is placed between the light source 14 and the photosensor 16 for measurement. Instead, one initialization phase measurement of $I_0$ could be used for the measurement of multiple articles 12 successively. The initialization phase should be repeated whenever the performance of the light source 14 and/or the photosensor 16 varies (e.g., drifts).

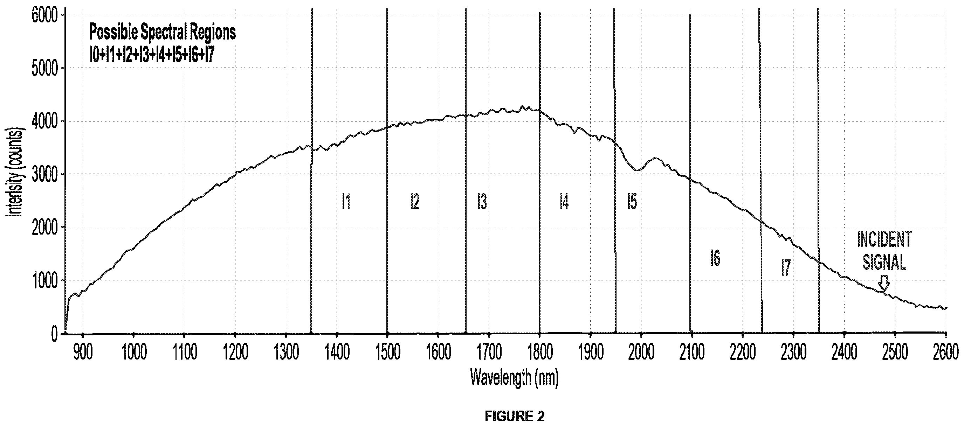

Using a programmable spectrometer as the photosensor 16 allows for the measured spectral sub-regions to be adapted for a variety of different materials. Figure 2 is a graph illustrating one way to set up the spectral sub-regions. In Figure 2, the "signal response" shows an example incident signal (without the article 12) for a wavelength range from 750 nm to 2600 nm. In this example, the total measurement range is 1350 nm to 2350 nm and the total measurement range is divided into seven sub-regions within the total measurement range, as shown in Figure. The first six sub-regions (I1 to 16) have the same "width" -- 150nm. The range of the last sub-region, 17, is 100 nm in this example. Thus, the sub-regions may or may not have the same width. Also, in the example of Figure 2, the sub-regions cover a continuous range and are non-overlapping. Neither is necessarily required. For a particular plastic material, it might be determined that a particular sub-range is not useful, such as $I_2$ in Figure 2, in which case total measurement range may be the sum of the sub-ranges $I_1$, $I_3$, $I_4$, $I_5$, $I_6$ and $I_7$ (and not including $I_2$). Also, the sub-ranges could overlap in their wavelength ranges, although in such an embodiment the processor 18 compensates for the overlap when computing $I_0$ so that response for the overlapping range is not disproportionally counted multiple times. The number and width of the sub-regions, as well as the starting and ending wavelengths, can be adapted based on the material of the article 12. As such, the system 10 can be used the measure the thickness of articles 12 made from many different types of plastic materials, including blends of multiple different types of plastic materials. In the case of a blend, a sample of the blended plastic material could be used to calibrate the system.

In the above description, the example NIR wavelength range of 1350nm to 2350nm was mentioned, particularly for the starting and ending wavelengths for the total measurement region. In other embodiments, differing starting and/or ending wavelengths could be used, such as a starting wavelength of 750 nm and/or an ending wavelength of 2450 nm, as an example. Also, in the above description, it was assumed that the starting wavelength is shorter than the ending wavelength, such that the spectrometer sequentially measures the response from the shorter wavelength bands to the higher wavelength bands. In other embodiments, the starting wavelength could be longer than the ending wavelength, such that the spectrometer sequentially measures the response from the longer wavelength bands to the shorter wavelength bands.

The processor 18 may be programmed through software to compute the thickness of the article 12 as described herein. The software may be stored in an onboard (primary and/or secondary) and/or off-line memory and may be implemented in computer software using any suitable computer programming language such as .NET, C, C++, Python, and using conventional, functional, or object-oriented techniques. Programming languages for computer software and other computer-implemented instructions may be translated into machine language by a compiler or an assembler before execution and/or may be translated directly at run time by an interpreter. Examples of assembly languages include ARM, MIPS, and x86; examples of high level languages include Ada, BASIC, C, C++, C#, COBOL, Fortran, Java, Lisp, Pascal, Object Pascal, Haskell, ML; and examples of scripting languages include Bourne script, JavaScript, Python, Ruby, Lua, PHP, and Perl.

In the above-described embodiments, the light source 14 is a single broadband light source. The broadband light source, in some embodiments, emits NIR radiation of a wavelength in a spectrum having a width of 1000 nm or more. In other embodiments, the light source 14 may comprise multiple narrow band light emitters. The narrow band light source, in some embodiments, emits NIR radiation of a wavelength in a spectrum having a width of 600 nm or less. The narrow band light source can be semiconductor-based, such as light emitting diodes (LEDs). For example, there could be a different narrow band light emitter for each spectral sub-region. In such embodiment, all narrow band emitters could be on simultaneously during the measurement phase or a sum of the measurement signals could be used for the measurement phase if the emitters are turned on sequentially in the measurement phase. Also, one narrow band emitter could cover two or more spectral sub-regions, but less than all of the spectral sub-regions.

Also, particularly in an embodiment where the light source 14 comprises a single broadband light source, the system 10 may comprise a series of narrowband NIR absorption filters, such as a narrow-band absorption filter for each of the spectral sub-regions. That way, a non-programmable broadband photosensor could be used as the photodetector. The narrow-band absorption filters could be turned on one at a time sequentially in the initialization phase to compute 10. In the measurement phase, none of the narrow-band absorption filters would be turned on (other than to block unwanted parts of the spectrum). The narrow band filters could be on either the light source side or the photosensor side (relative the article 12). The filters could be moved sequentially through the light path. Placing the filters on the photosensor side provides the advantage of reducing ambient light on the photosensor.

In still other embodiments, the light source 14 may comprise a broadband light source in combination with a rotating prism or a diffraction grating that sequentially produces the different spectral bands for the sub-regions. Such a rotating prism or diffraction grating would be used in the initialization phase. If the entire spectrum over which the measurement is being taken (e.g., 1350 nm to 2350 nm) can be transmitted together in the measurement phase, then the rotating prism or grating does not need to be used during the measurement phase. Alternatively, the rotating element could be used during the measurement phase with the measurement signal being the sum of the spectral regions when the container is present.

In one general aspect, therefore, the present invention is directed to systems and methods for measuring a thickness of a plastic article. In various embodiments, the method comprises the step of, in an initialization phase, separately and sequentially measuring incident light energy from a light source, by a photosensor, for each a plurality of spectral sub-regions within a total measurement range. The total measurement range comprises a starting near-infrared (NIR) wavelength and an ending NIR wavelength. The photosensor is opposite, spaced apart from, and faces the light source, such that the plastic article is positionable between the light source and the photosensor. Also, the light source emits the light energy toward the photosensor without the plastic article between the photosensor and the light source during the initialization phase. The method also comprises the step of computing, by a processor that is in communication with the photosensor, a baseline incident signal level for the initialization phase. Computing the baseline incident signal level can comprise summing, by the processor, the incident light energy for each of the plurality of spectral sub-regions within the total measurement range. The method also comprises, in a measurement phase after the initialization phase, computing, by the processor, a thickness of a plastic article positioned between the light source and the photosensor, wherein the thickness is computed based on at least (i) light energy detected by the photosensor that is transmitted from the light source through the plastic article over the total measurement range during the measurement phase and (ii) the computed baseline incident signal level.

A system can comprise, in various embodiments, the light source, the photosensor, and the processor. The light source is configured to emit NIR light energy. The photosensor is opposed and spaced apart from, and facing, the light source such that the plastic article is positionable between the light source and the photosensor. The photosensor is configured to detect incident NIR light energy from the light source that is incident on the photosensor. The processor is connected to the photosensor and is programmed to compute a thickness of a plastic article positioned between the light source and the photosensor by: (A) computing a baseline incident signal level for an initialization phase by summing incident light energy on the photosensor for each of a plurality of spectral sub-regions within a total measurement range; and (B) computing the thickness of the plastic article after the plastic article is placed between the light source and the photosensor during a measurement phase, where the thickness is computed based on at least (i) light energy detected by the photosensor that is transmitted from the light source through the plastic article over the total measurement range during the measurement phase and (ii) the computed baseline incident signal level.

In various implementations of the above-described systems and methods, each of the plurality of spectral sub-regions is below a saturation level for the photosensor. Also, the plurality of spectral sub-regions may comprise a plurality of non-overlapping spectral sub-regions. Still further, the plurality of spectral sub-regions could cover the entirety of wavelengths from the starting NIR wavelength to the ending NIR wavelength. The starting NIR wavelength could be, for example, 750 nm +/- 50 nm or 1350 nm +/- 50 nm. The ending NIR wavelength could be 2350 nm +/- 50 nm, for example.

In any of the implementations of the systems and methods described herein, the plastic article can comprise a plastic material selected from the group consisting of HDPE, PP, PE and PET. Also, the plastic article could comprise a translucent plastic material.

In any of the implementations of the systems and methods described herein, the light source could comprise a single broadband light source or two or more narrow-band NIR light sources. Also, the photosensor could comprise a programmable spectrometer.

The examples presented herein are intended to illustrate potential and specific implementations of the present invention. It can be appreciated that the examples are intended primarily for purposes of illustration of the invention for those skilled in the art. No particular aspect or aspects of the examples are necessarily intended to limit the scope of the present invention. It is to be understood that the figures and descriptions of the present invention have been simplified to illustrate elements that are relevant for a clear understanding of the present invention, while eliminating, for purposes of clarity, other elements. While various embodiments have been described herein, it should be apparent that various modifications, alterations, and adaptations to those embodiments may occur to persons skilled in the art with attainment of at least some of the advantages. The disclosed embodiments are therefore intended to include all such modifications, alterations, and adaptations without departing from the scope of the embodiments as set forth herein.

## Claims

1. A method for measuring a thickness of a plastic article, the method comprising:

   in an initialization phase, separately and sequentially measuring incident light energy from a light source, by a photosensor, for each a plurality of spectral sub-regions within a total measurement range, wherein:

   the total measurement range comprises a starting near-infrared (NIR) wavelength and an ending NIR wavelength;
   the photosensor is opposite, spaced apart from, and faces the light source, such that the plastic article is positionable between the light source and the photosensor; and
   the light source emits the light energy toward the photosensor without the plastic article between the photosensor and the light source during the initialization phase;

   computing, by a processor that is in communication with the photosensor, a baseline incident signal level for the initialization phase, wherein computing the baseline incident signal level comprises summing, by the processor, the incident light energy for each of the plurality of spectral sub-regions within the total measurement range; and
   in a measurement phase after the initialization phase, computing, by the processor, a thickness of a plastic article positioned between the light source and the photosensor, wherein the thickness is computed based on at least (i) light energy detected by the photosensor that is transmitted from the light source through the plastic article over the total measurement range during the measurement phase and (ii) the computed baseline incident signal level.

2. The method of claim 1, wherein each of the plurality of spectral sub-regions is below a saturation level for the photosensor.

3. The method of claim 2, wherein the plurality of spectral sub-regions comprise a plurality of non-overlapping spectral sub-regions.

4. The method of claim 2 or 3, wherein the plurality of spectral sub-regions cover an entirety of wavelengths from the starting NIR wavelength to the ending NIR wavelength.

5. The method of claim 2, wherein the starting NIR wavelength is 750 nm +/- 50 nm.

6. The method of claim 2, wherein the starting NIR wavelength is 1350 nm +/- 50 nm

7. The method of claim 6, wherein the ending NIR wavelength is 2350 nm +/- 50 nm.

8. The method of any one of claims 2 to 7, wherein the plastic article comprises a plastic material selected from the group consisting of HDPE, PP, PE and PET.

9. The method of claim 8, wherein the plastic article comprises a translucent plastic material.

10. A system for measuring a thickness of a plastic article, the measurement system comprising:

    a light source that is configured to emit NIR light energy;
    a photosensor opposed and spaced apart from, and facing, the light source such that the plastic article is positionable between the light source and the photosensor, wherein the photosensor is configured to detect incident NIR light energy from the light source that is incident on the photosensor; and
    a processor connected to the photosensor, wherein the processor is programmed to compute a thickness of a plastic article positioned between the light source and the photosensor by:

    computing a baseline incident signal level for an initialization phase, wherein computing the baseline incident signal level comprises summing, by the processor, incident light energy on the photosensor for each of a plurality of spectral sub-regions within a total measurement range, wherein, in the initialization phase:

    the light source emits the light energy toward the photosensor without the plastic article positioned between the photosensor and the light source;
    the photosensor is configured to separately and sequentially measure incident light energy for each of the plurality of spectral sub-regions within the total measurement range; and
    the total measurement range comprises a starting NIR wavelength and an ending NIR wavelength; and

computing the thickness of the plastic article after the plastic article is placed between the light source and the photosensor during a measurement phase, wherein the thickness is computed based on at least (i) light energy detected by the photosensor that is transmitted from the light source through the plastic article over the total measurement range during the measurement phase and (ii) the computed baseline incident signal level.

11. The system of claim 10, wherein each of the plurality of spectral sub-regions is below a saturation level for the photosensor.

12. The system of claim 11, wherein the light source comprises a single broadband light source.

13. The system of claim 11, wherein the light source comprises two or more narrow-band NIR light sources.

14. The system of any one of claims 11 to 13 , wherein the photosensor comprises a programmable spectrometer.

15. The system of any one of claims 11 to 14, wherein the plastic article comprises a plastic material selected from the group consisting of HDPE, PP, PE and PET.

FIGURE 1

**FIGURE 2**

EP 3 916 343 A1

Europäisches
Patentamt
European
Patent Office
Office européen
des brevets

# EUROPEAN SEARCH REPORT

**Application Number**

EP 21 17 6100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/156603 A1 (RUPNOWSKI PRZEMYSLAW [US] ET AL) 7 June 2018 (2018-06-07) * paragraph [0047] - paragraph [0048]; figures 1,4,5 * * paragraphs [0020], [0022], [0025], [0026], [0031], [0051] * ----- | 1,3-10, 12-15 | INV. G01B11/06 G01B21/04 |
| X | US 4 885 709 A (EDGAR ROGER F [GB] ET AL) 5 December 1989 (1989-12-05) * column 15, line 11 - line 27; figure 4 * * column 15, line 51 - column 16, line 13 * * column 17, line 65 - column 18, line 17 * ----- | 1-4, 10-13 | |
| A | US 2018/292260 A1 (GARSHA KARL [US] ET AL) 11 October 2018 (2018-10-11) * the whole document * ----- | 1-15 | |

**TECHNICAL FIELDS SEARCHED (IPC)**

G01B

The present search report has been drawn up for all claims

| Place of search | Date of completion of the search | Examiner |
|---|---|---|
| Munich | 28 September 2021 | Gomez, Adriana |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 17 6100

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2021

| Patent document cited in search report | | Publication date | Patent family member(s) | | Publication date |
|---|---|---|---|---|---|
| US 2018156603 | A1 | 07-06-2018 | NONE | | |
| US 4885709 | A | 05-12-1989 | CA | 1260628 A | 26-09-1989 |
| | | | DE | 3751924 T2 | 27-02-1997 |
| | | | EP | 0230365 A2 | 29-07-1987 |
| | | | US | 4885709 A | 05-12-1989 |
| US 2018292260 | A1 | 11-10-2018 | AU | 2014211384 A1 | 02-07-2015 |
| | | | AU | 2018201146 A1 | 08-03-2018 |
| | | | CA | 2896197 A1 | 07-08-2014 |
| | | | CA | 3053060 A1 | 07-08-2014 |
| | | | EP | 2951543 A2 | 09-12-2015 |
| | | | JP | 6392785 B2 | 19-09-2018 |
| | | | JP | 2016510408 A | 07-04-2016 |
| | | | JP | 2018119968 A | 02-08-2018 |
| | | | JP | 2019124695 A | 25-07-2019 |
| | | | JP | 2021047207 A | 25-03-2021 |
| | | | US | 2015369664 A1 | 24-12-2015 |
| | | | US | 2018292260 A1 | 11-10-2018 |
| | | | US | 2020209061 A1 | 02-07-2020 |
| | | | WO | 2014118326 A2 | 07-08-2014 |

EPO FORM P0459

For more details about this annex : see Official Journal of the European Patent Office, No. 12/82